# EUROPÄISCHE PATENTSCHRIFT

(11) **EP 3 317 556 B1**
(45) Veröffentlichungstag und Bekanntmachung des Hinweises auf die Patenterteilung: **04.09.2019**
(21) Anmeldenummer: 16733557.9
(22) Anmeldetag: 30.06.2016
(51) Int. Cl.: F16D 65/56

(54) **NACHSTELLEINRICHTUNG FÜR EINE SCHEIBENBREMSE**
ADJUSTMENT DEVICE FOR A DISK BRAKE
DISPOSITIF DE RATTRAPAGE DE JEU POUR UN FREIN À DISQUE

(30) Priorität: 02.07.2015 DE 102015110676
(43) Veröffentlichungstag der Anmeldung: 09.05.2018
(73) Patentinhaber: KNORR-BREMSE Systeme für Nutzfahrzeuge GmbH, 80809 München (DE)
(72) Erfinder: BAUMGARTNER, Johann, 85368 Moosburg (DE)
(86) Internationale Anmeldenummer: PCT/EP2016/065267
(87) Internationale Veröffentlichungsnummer: WO 2017/001545

(56) Entgegenhaltungen:
- EP-A1- 1 546 571

## Beschreibung

Die vorliegende Erfindung betrifft eine Nachstelleinrichtung für eine pneumatisch betätigbare Scheibenbremse nach dem Oberbegriff des Anspruchs 1.

Mechanisch über eine Zuspanneinrichtung, beispielsweise eine Drehhebel, betätigte Nachstelleinrichtungen, die für das Nachstellen von Bremsbelägen von pneumatisch betätigbaren Scheibenbremsen für ein Fahrzeug zum Ausgleich des Bremsbelag- und Bremsscheibenverschleißes zum Einsatz kommen, sind aus dem Stand der Technik vielfach bekannt. Solche mechanisch betätigte Nachstelleinrichtungen haben sich an sich bewährt, weisen aber oftmals den Nachteil eines relativ großen Bauraumbedarfs auf. Darüber hinaus ist bei solchen mechanisch betätigten Nachstelleinrichtungen die Aktivierung der Nachstellfunktion abhängig von der Bremsbetätigung, so dass eine Nachstellbewegung nur während der Betätigung der Betriebsbremse erfolgen kann.

Eine von der Bremsbetätigungseinrichtung unabhängig aktivierbare, da pneumatisch betätigte Nachstellungeinrichtung ist in der gattungsgemäßen EP 1 546 571 B1 beschrieben. Trotz des kleineren Bauraumes im Vergleich zu vielen herkömmlichen mechanischen Nachstelleinrichtungen, der auch den Einbau im Sattelrücken der Scheibenbremse ermöglicht, ist diese Lösung bisher nicht in Serienanwendungen realisiert worden. Nachteilig an der Lösung nach der EP 1 546 571 B1 ist, dass die exakte Lüftspieleinstellung noch relativ stark toleranzbehaftet ist.

Der Erfindung liegt daher die Aufgabe zu Grunde, eine von der Bremsbetätigungseinrichtung unabhängig aktivierbare, pneumatisch Nachstelleinrichtung für eine Scheibenbremse zu schaffen, welche die vorgenannten Nachteile des gattungsgemäßen Standes der Technik zumindest verringert.

Die Erfindung löst die Aufgabe durch den Gegenstand des Anspruchs 1. Geschaffen wird danach eine Nachstelleinrichtung für eine pneumatisch betätigbare Scheibenbremse für ein Fahrzeug, die zum Verschleißausgleich zwischen einem Bremsbelag oder mehreren Bremsbelägen und/oder einer Bremsscheibe ausgelegt ist, wobei die Nachstelleinrichtung zumindest folgendes aufweist: eine pneumatische Aktuatoreinrichtung, welche einen Zylinder aufweist, in den ein axial verschiebbarer und mit Druckluft beaufschlagbarer Kolben eingesetzt ist, der durch Druckluftbeaufschlagung in eine erste Richtung bewegbar ist; einen nicht selbsthemmend ausgelegten Gewindetrieb, der eine Gewindemutter und eine Gewindewelle aufweist; wobei der Kolben mit der Gewindemutter drehfest gekoppelt ist und wobei die Gewindewelle drehbar die Gewindemutter durchsetzt; wobei wenigstens eine Rückstellfeder vorgesehen ist, mit welcher der Kolben im Zylinder in eine der ersten Richtung entgegengesetzte zweite Richtung bewegbar ist, und die Nachstelleinrichtung derart ausgelegt ist, dass infolge einer Beaufschlagung des Kolbens mit Druckluft ein Zustellhub sowie federbetätigt infolge der Federkraft der wenigstens einen Rückstellfeder ein Rückstellhub ausführbar ist. Da neben einem Zustellhub mit definiertem Betrag auch ein Rückstellhub ausführbar ist, wird eine präzise Lüftspieleinstellung erleichtert.

Als "Lüftspiel" wird nachfolgend der Abstand zwischen Bremsbelag und Bremsscheibe im gelösten Zustand der Bremse bezeichnet. Unterschieden wird dabei zwischen dem "konstruktiven Lüftspiel", also dem nominalen, theoretischen Lüftspiel, das im Rahmen der konstruktiven Auslegung einer Scheibenbremse festgelegt wird und dem "tatsächlichen Lüftspiel", dessen Betrag an einer kalten Scheibenbremse zwischen Bremsbelag und Bremsscheibe messbar ist und Toleranzen unterworfen ist, so dass dessen Betrag vom Betrag des konstruktiven Lüftspiels abweicht. Sofern nur der Begriff "Lüftspiel" verwendet wird, ist damit das "tatsächliche Lüftspiel" gemeint. Andernfalls wird der Begriff des "konstruktiven Lüftspiels" verwendet.

In einer bevorzugten Ausführungsform ist der Betrag des Rückstellhubs der Nachstelleinrichtung durch einen definierten Abstand h zwischen zwei Bauteilen bzw. zwei Geometrieausbildungen der Nachstelleinrichtung festgelegt ist, wobei der Abstand h in einem definierten Betriebszustand der Nachstelleinrichtung bestimmt ist. E ist somit der Betrag des konstruktiven Lüftspiels der Nachtstelleinrichtung bzw. der Scheibenbremse durch einen Abstand - also eine direkt messbare Größe - von zwei mit hoher Präzision zu fertigbaren Bauteilen bzw. durch das Ein- bzw. Ansetzen dieser Bauteile in bzw. an Geometrieausbildungen anderer Bauteile, die ebenfalls mit hoher Präzision fertigbar sind, definiert. Dadurch wird in besonders vorteilhafter Art und Weise der toleranzvergrößernde Einfluss von nur indirekt messbaren Bauteilkenngrößen, wie z.B. eine Federkennlinie etc. auf den Rückstellhub und damit auf den Betrag des Lüftspiels der Nachstelleinrichtung verringert.

Besonders vorteilhaft wirkt eine solche Festlegung des Rückstellhubs und damit des konstruktiven Lüftspiels der Nachstelleinrichtung, wenn der zu definierende Abstand in einem einfach festzulegenden Betriebszustand der Nachstellvorrichtung bestimmt ist. Ein solcher Betriebszustand ist einfach und damit vorteilhaft dadurch definiert, dass in diesem Betriebszustand durch die Nachstelleinrichtung der Bremspunkt eines Bremsbelages der Scheibenbremse erreicht, bei welchem der Bremsbelag durch die Nachstelleinrichtung an die Bremsscheibe der Scheibenbremse soeben angelegt ist, so dass die Bremswirkung gerade einsetzt.

Durch die pneumatische Aktuatoreinrichtung kann die Nachstelleinrichtung vorteilhaft autark von der Bremsbetätigung in Funktion gesetzt werden. Hierzu erfolgt eine Druckluftbeaufschlagung. Der vorgesehene Gewindetrieb wandelt bauraumsparend und damit vorteilhaft eine translatorische Bewegung des Kolbens in eine rotatorische Bewegung der Gewindewelle um.

Die Gewindewelle weist nach einer vorteilhaften Variante einen Keilverzahnungsabschnitt auf. Dieser Keilverzahnungsabschnitt steht in Wirkverbindung mit einer Keilverzahnungsnabe in einer Antriebsscheibe. Derart wird bauraumsparend und damit vorteilhaft eine axial unter Last verschiebbare, formschlüssige Wellen-Nabe-Verbindung gebildet.

Die Gewindewelle der Nachstelleinrichtung weist nach einer weiteren vorteilhaften Variante ferner vorzugsweise einen Lagerabschnitt auf, durch den die Gewindewelle über ein Lager, insbesondere ein zweiseitig wirkendes Axialnadellager, drehbar im Bremssattel gelagert ist. Ferner weist die Gewindewelle der Nachstelleinrichtung vorzugsweise ein Loslager auf, das durch zwei Axiallagerscheiben gebildet ist. Durch die Verwendung eines Axialnadellagers bzw. besonders schmal bauenden Axiallagerscheiben sind die Lagerstellen der Gewindewelle besonders bauraumsparend und damit vorteilhaft gestaltet.

Der Kolben weist vorzugsweise eine entriegelbare, eine axiale Verschiebung des Kolbens ermöglichende Verdrehsicherungseinrichtung auf. Durch diese vorteilhafte entriegelbare Verdrehsicherungseinrichtung kann die Nachstelleinrichtung einfach nach dem Wechsel von verschlissenen Bremsbelägen und / oder einer verschlissenen Bremsscheibe in eine Grundstellung gebracht werden, ohne dass dazu die Kinematik der Nachstelleinrichtung entsprechend ausgelegt sein muss oder dazu ein spezieller Drehmomentpfad in der Nachstelleinrichtung bereitgehalten werden muss. Dadurch wird in vorteilhafter Weise Bauraum gespart.

Der Kolben weist weiter vorzugsweise im Bereich der Innenseite eines freien Endes eines Kolbenhemdes vorzugsweise einen Anschlagring auf. Der Anschlagring ist vorzugsweise in eine Nut eingesetzt und dadurch formschlüssig am Kolben befestigt. Durch die Ausführung des Kolbens mit einem Kolbenhemd ist der Kolben sicher und reibungsarm und damit vorteilhaft in dem Zylinder geführt. Darüber hinaus können auf einer Innenseite des Kolbens bauraumsparend und damit ebenfalls vorteilhaft Funktionsbauteile der Nachstelleinrichtung angeordnet werden.

Die Nachstelleinrichtung weist in einer weiteren vorteilhaften Ausführungsvariante wenigstens ein Abtriebsrad auf. Das Abtriebsrad weist ein Innengewinde auf, das mit einem Außengewinde der Gewindespindel in Wirkverbindung stehen kann. Derart wird ein zweiter Gewindetrieb gebildet, der das Drehmoment der Gewindewelle in eine translatorisch wirkende (Bewegung und) Kraft umwandelt, die z.B. über ein Druckstück auf den wenigsten einen Bremsbelag übertragen werden kann, damit dieser einen Zustellhub oder einen Rückstellhub ausführt. Dazu ist das Druckstück so mit dem Bremsbelag verbunden, dass es diesen vor- und zurückschieben kann. Dadurch wird durch ein bauraumsparender und damit vorteilhafter zweiter Gewindetrieb geschaffen, der das Drehmoment der Gewindewelle in eine translatorisch wirkende Bewegung und Kraft umwandelt, die auf die Bremsbeläge bzw. auf die Bremsscheibe der Scheibenbremse wirkt.

Die Nachstelleinrichtung weist nach einer weiteren vorteilhaften Variante ferner eine Hülse bzw. eine Federhülse auf, durch die das eingeleitete Drehmoment der Gewindewelle auf Abtriebselemente über Übertragungselemente, so beispielsweise zweckmäßig auf ein Innenprofil des Abtriebsrad, übertragen wird. Auf diese Weise ist eine drehfeste Kopplung der Hülse mit dem Abtriebsrad gebildet. Außerdem bildet diese Art der Kopplung ein einfaches kardanisches Gelenk, wodurch vorteilhaft mögliche Kipp- bzw. Präzessionsbewegungen einer Gewindespindel, die das Drehmoment in eine translatorisch wirkende Kraft umwandelt, ausgleichbar sind.

Die Nachstelleinrichtung weist sodann vorzugsweise eine erste Kugelrampenkupplung und weiter vorzugsweise eine zweite Kugelrampenkupplung auf. Durch die Verwendung von Kugelrampenkupplungen können verschiedene Drehmomentpfade, wie sie für die Funktion der Nachstelleinrichtung erforderlich sind, einfach und bauraumsparend und damit vorteilhaft geschaltet werden.

Weitere vorteilhafte Ausführungen der erfindungsgemäßen Nachstelleinrichtung sind den Unteransprüchen zu entnehmen.

Ein Ausführungsbeispiel einer erfindungsgemäßen Nachstelleinrichtung ist in der Zeichnung dargestellt und wird im Folgenden näher beschrieben.

Es zeigt:

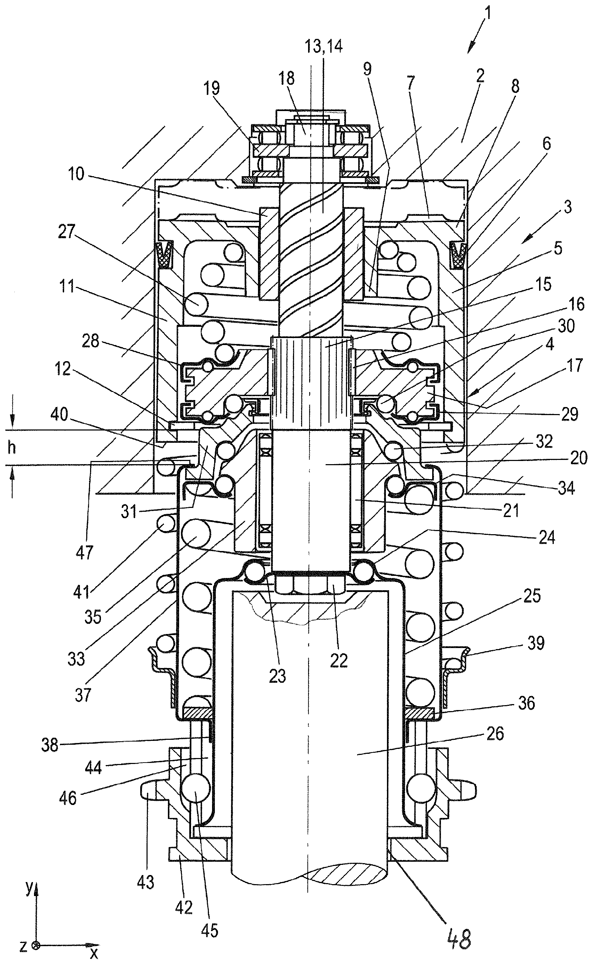

- Figur 1:: eine Vorderansicht der Nachstelleinrichtung im Schnitt, eingebaut in einen nur teilweise dargestellten Bremssattel.

Fig. 1 zeigt eine Vorderansicht der Nachstelleinrichtung im Schnitt. Die Nachstelleinrichtung 1 ist in einen Bremssattel 2 einer (ansonsten hier nicht dargestellten) Scheibenbremse eingebaut bzw. einbaubar, die - bis auf die Nachstelleinrichtung oder mehrere der Nachstelleinrichtungen z.B. nach Art der EP 1 546 571 B1 aufgebaut sein kann, d.h. sie weist eine pneumatisch betätigbare Zuspanneinrichtung zum Zuspannen der Bremse bei Bremsungen auf (hier nicht dargestellt).

Die Nachstelleinrichtung 1 weist eine pneumatisch betätigbare (d.h. mit Druckluft beaufschlagbare) Aktuatoreinrichtung 3 auf. Hierdurch ist die Nachstelleinrichtung 1 vorteilhaft unabhängig von einer Bremsbetätigung aktivierbar. Die pneumatisch betätigbare Aktuatoreinrichtung 3 weist einen Zylinder 4 auf. In den Zylinder 4 ist ein in dem Zylinder 4 axial verschiebbarer und mit Druckluft beaufschlagbarer Kolben 5 eingesetzt. Der Kolben 5 weist eine Dichtung 6 auf, die in eine Nut im Kolben 5 eingesetzt ist. Die Dichtung 6 dichtet den Raum des Zylinders 4 oberhalb der Dichtung 6 bzw. in negativer y-Richtung in Bezug auf das Koordinatensystem in Fig. 1 gegenüber der Umgebung ab. Die Druckluftbeaufschlagung kann wiederum mit Hilfe eines (hier nicht dargestelltes) Drucklufterzeugungssystems eines Fahrzeugs erfolgen, dass an die Scheibenbremse angeschlossen ist und mit einer Steuerelektronik zur Steuerung der Bremse verbunden ist (hier nicht dargestellt).

Der Kolben 5 weist einen Kolbenboden 8 auf. Der Kolbenboden 8 weist eine Außenseite auf, die in Richtung eines Hub- bzw. Druckraums des Zylinders 4 ausgebildet ist, bzw. in positiver y-Richtung in Bezug auf das Koordinatensystem in Fig. 1 ausgebildet ist. Der Kolbenboden 8 weist ferner eine Innenseite auf, die in einer dem Hub bzw. Druckraums des Zylinders 4 abgewandter Richtung ausgebildet ist, bzw. in negativer y-Richtung in Bezug auf das Koordinatensystem in Fig. 1 ausgebildet ist.

Der Kolben 5 weist wenigstens einen oder hier mehrere - in der Fig. 1 obere - Kolbenanschläge 7 auf, die sich jeweils erhaben auf der Außenseite des Kolbenbodens 8 über den Kolbenboden 8 in positiver y-Richtung in Bezug auf das Koordinatensystem in Fig. 1 erstrecken und hier vorteilhaft einstückig an dem Kolben 5 angeformt sind.

Der Kolben 5 weist ferner einen zentrisch angeordneten Kragen 9 auf, der sich in negativer y-Richtung in Bezug auf das Koordinatensystem in Fig. 1 erstreckt. Der Kolben 5 weist weiterhin eine zentrale Bohrung auf, die vom Kragen 9 begrenzt ist. In die Bohrung ist eine Gewindemutter 10 eingesetzt.

Der Kolben 5 weist sodann vorzugsweise eine entriegelbare, eine axiale Verschiebung des Kolbens 5 ermöglichende, Verdrehsicherungseinrichtung (hier nicht dargestellt) auf. Durch die entriegelbare Verdrehsicherungseinrichtung kann die Nachstelleinrichtung 1 nach dem Wechsel von verschlissenen Bremsbelägen und / oder einer verschlissenen Bremsscheibe einfach und vorteilhaft in eine Grundstellung gebracht werden, ohne dass dazu die Kinematik der Nachstelleinrichtung 1 entsprechend ausgelegt sein muss oder in der Nachstelleinrichtung 1 dazu ein spezieller Drehmomentpfad bereitgehalten werden muss. Dadurch wird in vorteilhafter Weise Bauraum gespart.

Der Kolben 5 weist im Bereich der Innenseite des freien Endes eines sogenannten Kolbenhemdes 11 ferner einen Anschlagring 12 auf. Der Anschlagring 12 ist in eine Nut eingesetzt und dadurch formschlüssig am Kolben 5 befestigt. Durch die Ausführung des Kolbens 5 mit einem relativ langen Kolbenhemd 11 ist der Kolben 5 sicher und reibungsarm und damit vorteilhaft in dem Zylinder 4 geführt. Darüber hinaus können auf der Innenseite des Kolbens 5 bauraumsparend und damit ebenfalls vorteilhaft Funktionsbauteile der Nachstelleinrichtung 1 angeordnet werden.

Der Kolben 5 ist mit einem nicht selbsthemmend ausgelegten Gewindetrieb 10, 13, 14 gekoppelt, der eine Gewindemutter 10 und eine Gewindewelle 13 aufweist. Dazu durchsetzt der Gewindetrieb eine zentrische Öffnung des Kolbens 5.

Die Gewindewelle 13 weist einen Gewindeabschnitt 14 auf. Dieser Gewindeabschnitt 14 steht in Wirkverbindung mit der Gewindemutter 10, die vom Gewindeabschnitt 14 der Gewindewelle 13 durchgriffen ist. Derart wird der Gewindetrieb gebildet. Die Gewindemutter ist fest mit dem Kolben verbunden, so dass sie sich mit diesem bei Bewegungen des Kolbens 5 translatorisch verschiebt, wobei sie die Gewindewelle 13 des nicht selbsthemmend ausgelegten Gewindetriebes in Drehung versetzt. Der Gewindetrieb wandelt derart besonders bauraumsparend und damit vorteilhaft eine translatorische Bewegung des Kolbens 5 in eine rotatorische Bewegung der Gewindewelle 13 um.

Die Gewindewelle 13 weist ferner an ihrem einen Ende einen Lagerabschnitt 18 auf. Dieser Lagerabschnitt 18 ist hier mehrfach gestuft ausgebildet. Der Lageabschnitt 18 ist über ein Lager drehbar im Bremssattel 2 gelagert. Das Lager liegt an dem von einem (hier nicht dargestellten) Bremsbelag abgewandten Ende der Gewindewelle 13.

Vorzugweise ist das vorgesehene Lager ein zweiseitig wirkendes Lager. Besonders bevorzugt wird ein Axialnadellager, insbesondere ein zweiseitig wirkendes Axialnadellager 19 verwendet, mit dem die Gewindewelle 13 drehbar im Bremssattel 2 gelagert ist. Der Lagerabschnitt 18 ist ferner vorzugsweise mehrfach gestuft ausgebildet.

Das Lager, hier das zweiseitig wirkende Axialnadellager 19, bildet damit ein Widerlager für die Gewindewelle 13. Der Bremssattel 2 weist dafür eine entsprechende Öffnung, insbesondere eine Gehäusebohrung auf, in der das zweiseitig wirkende Axialnadellager 19 eingesetzt und axialer Richtung in Richtung positiver y-Richtung in Bezug auf das Koordinatensystem in Fig. 1 festgelegt ist.

Das zweiseitig wirkende Axialnadellager 19 ist in axialer Richtung bzw. in negativer y-Richtung in Bezug auf das Koordinatensystem in Fig. 1 durch einen Gehäusesicherungsring festgelegt. Durch die Verwendung eines zweiseitig wirkenden Axialnadellagers 19 ist das Festlager der Gewindewelle 13 besonders bauraumsparend und damit vorteilhaft gestaltet.

Die Gewindewelle 13 erstreckt sich ausgehend von dem Lager am/im Bremssattel 2 durch den Kolben 5 hindurch. An der vom Bremssattel 2 abgewandten Seite des Kolbens 5 weist die Gewindewelle 13 einen Keilverzahnungsabschnitt 15 auf. Dieser Keilverzahnungsabschnitt 15 steht in Wirkverbindung mit einer Keilverzahnungsnabe 16 in einer Antriebsscheibe 17. Derart wird bauraumsparend und damit vorteilhaft eine axial unter Last verschiebbare, formschlüssige Wellen-Nabe-Verbindung gebildet.

Die Gewindewelle 13 weist ferner einen Freilaufabschnitt 20 auf. Der Freilaufabschnitt 20 durchgreift die Nabe eines Freilaufs 21. Der Freilauf 21 kann z.B. als Klemmrollenfreilauf ausgeführt sein.

Die Gewindewelle 13 weist an ihrem dem mehrfach gestuften Lagerabschnitt 18 abgewandten Ende eine hier axial-zentrische Innengewindesackbohrung auf. In die Innengewindesackbohrung ist eine Schraube, hier eine Mehrkantschraube 22 eingesetzt. Durch die Mehrkantschraube 22 ist eine Axiallagerscheibe 23 an der Gewindewelle 13 befestigt. Die Axiallagerscheibe 23 bildet gemeinsam mit einer Wälzkörperrille 24 sowie Wälzkörper -hier als Kugeln ausgeführt- ein Axiallager, das das Loslager der Gewindewelle 13 bildet. Durch die Verwendung besonders schmal bauenden Axiallagerscheiben 23 bzw. 25 ist das Loslager der Gewindewelle 13 besonders bauraumsparend und damit vorteilhaft gestaltet.

Die Wälzkörperrille 24 ist in eine Stirnseite einer Hülse 25 durch ein Umformverfahren eingebracht. Die Hülse 25 schließt sich in negativer y-Richtung in Bezug auf das Koordinatensystem in Fig. 1 koaxial zur Gewindewelle 13 an. Die Hülse 25 weist einen glockenförmigen Querschnitt auf.

Die Nachstelleinrichtung 1 weist ferner wenigstens eine Gewindespindel 26 auf. Die Gewindespindel 26 schließt sich in negativer y-Richtung in Bezug auf das Koordinatensystem in Fig. 1 koaxial zur Gewindewelle 13 an und wirkt direkt als Druckstück oder über ein Druckstück auf einen der Bremsbeläge (hier nicht dargestellt) der Scheibenbremse ein. Die Gewindespindel 26 taucht mit ihrem der Gewindewelle 13 zugewandtem Ende zumindest teilweise in die Hülse 25 ein.

Die Nachstelleinrichtung 1 weist vorzugsweise wenigstens ein Abtriebsrad 42 auf. Das Abtriebsrad 42 weist ein Innengewinde 48 auf, das mit einem Außengewinde der Gewindespindel 26 in Wirkverbindung steht. Derart wird ein zweiter Gewindetrieb gebildet, der das Drehmoment der Gewindewelle 13 in eine translatorisch wirkende Kraft umwandelt, die z.B. über ein Druckstück (hier nicht dargestellt) auf den wenigsten einen Bremsbelag bzw. auf die Bremsscheibe der Scheibenbremse wirkt.

Alternativ kann das Abtriebsrad 42 auch drehfest mit der Gewindespindel 26 verbunden sein. In einem solchen Fall wird der zweite Gewindetrieb durch die Gewindespindel 26 und einem Innengewinde z.B. in einem Druckstück (hier nicht dargestellt, siehe DE 10 2012 108 672 B3, Fig. 6, Bezugszeichen 6e) oder dem Innengewinde in einer Belagträgerplatte des Bremsbelages oder dem Innengewinde in einem weiteren Bauteil (hier nicht dargestellt, siehe DE 10 2012 108 672 B3, Fig. 6, Bezugszeichen 8) gebildet.

Das Abtriebsrad 42 ist optional mit einem Synchronisationsmittel 43 gekoppelt. Das Synchronisationsmittel 43 ist hier beispielhaft als Kettenradverzahnung ausgeführt, die einen Umschlingungstrieb mit einer Kette zur Synchronisation der Drehbewegung der Gewindespindel 26 mit einer optional vorgesehenen zweiten Gewindespindel (nicht dargestellt) führt, die ebenfalls direkt oder über ein Druckstück auf den Bremsbelag wirken kann. Es sind alternativ auch andere Synchronisationsmittel 43 möglich, beispielsweise eine Evolventenverzahnung, die dann mit der Verzahnung eines Zwischenrades kämmt, dass wiederum in Wirkverbindung mit einem weiteren Abtriebsrad 42 steht. Das Abtriebsrad 42 weist ferner ein Innenprofil 46 auf. Das Innenprofil 46 ist hier beispielhaft nach der Art eines Verzahnungsprofils gestaltet.

Die Hülse 25 weist an ihrem Umfang mehrere Abtriebselemente 44 auf, die jeweils einstückig an der Hülse 25 angeformt sind. Das Abtriebselement 44 ist hier beispielhaft nach der Art eines Verzahnungsprofils gestaltet.

Eine Federhülse 37 ist über einen Kragen 38 drehfest mit der Hülse 25 verbunden. Ein in die Federhülse 37 bzw. über den Kragen 38, den die Federhülse 37 ausbildet, auch in die Hülse 25 eingeleitetes Drehmoment der Gewindewelle13 wird durch die Abtriebselemente 44 über Übertragungselemente 45, die hier beispielhaft als Kugeln ausgeführt sind, auf das Innenprofil 46 des Abtriebsrads 42 übertragen.

Auf diese Weise ist eine drehfeste Kopplung der Hülse 25 mit dem Abtriebsrad 42 gebildet. Außerdem bildet diese Art Kopplung ein kardanisches Gelenk, wodurch vorteilhaft mögliche Kipp- bzw. Präzessionsbewegungen der wenigstens einen Gewindespindel 26, die das Drehmoment der Gewindewelle 13 über das Gewinde xx des Abtriebsrades 42 in eine translatorisch wirkende Kraft umwandelt, ausgleichbar sind.

Die Aktuatoreinrichtung 3 weist eine erste Rückstellfeder 27 auf. Die erste Rückstellfeder 27 ist eine schraubenförmige Torsionsfeder und als Doppelkegel- bzw. Tonnenfeder gestaltet und weist demnach eine progressive Federkennlinie auf. Die erste Rückstellfeder 27 stützt sich mit ihrem oberen Ende bzw. ihrem Ende in positiver y-Richtung in Bezug auf das Koordinatensystem in Fig. 1 in einem Übergang zwischen der Innenseite des Kolbenbodens 8 und dem Kragen 9 ab. Die erste Rückstellfeder 27 stützt sich mit ihrem unteren Ende auf einem oberen Lagerring 28 ab.

Der obere Lagerring 28 bildet mit der Antriebsscheibe 17 und Wälzkörpern -hier als Kugeln ausgeführt- ein erstes Wälzlager, durch das die Antriebsscheibe 17 drehbar gelagert ist. Die Antriebsscheibe 17 weist an ihrer oberen Stirnseite bzw. an ihrer Seite in positiver y-Richtung in Bezug auf das Koordinatensystem in Fig. 1 eine entsprechende Rille auf, in der die Wälzköper des ersten Wälzlagers der Antriebsscheibe 17 abwälzen. Der obere Lagerring 28 ist am Umfang der Antriebsscheibe 17 an ihr befestigt und greift dazu in eine entsprechende Nut ein.

Ein zweites Wälzlager, durch das durch das die Antriebsscheibe 17 drehbar gelagert ist, ist durch einen unteren Lagerring 29 und Wälzkörpern -hier ebenfalls als Kugeln ausgeführt- gebildet. Die Antriebsscheibe 17 weist an ihrer unteren Stirnseite bzw. an ihrer Seite in negativer y-Richtung in Bezug auf das Koordinatensystem in Fig. 1 eine entsprechende Rille auf, in der die Wälzköper des ersten Wälzlagers der Antriebsscheibe 17 abwälzen. Der untere Lagerring 28 ist am Umfang der Antriebsscheibe 17 an ihr befestigt und greift dazu in eine entsprechende Nut ein.

Der untere Lagerring 28 stützt sich in der in Fig. 1 dargestellten Betriebszustand der Nachstelleinrichtung 1 auf dem Anschlagring 12 ab, bzw. kontaktiert den Anschlagring 12 derart, dass sich der untere Lagerring 28 und der Anschlagring 12 gerade noch bzw. gerade eben berühren. Dieser Betriebszustand ist dadurch definiert, dass durch die Nachstelleinrichtung der Bremsbelag bzw. die Bremsbeläge der Scheibenbremse an die Bremsscheibe soeben angelegt sind, so dass der Bremspunkt des Bremsbelages bzw. der Bremsbeläge erreicht ist.

Die Antriebsscheibe 17 weist an ihrer unteren Stirnseite, an ihrer Seite in negativer y-Richtung in Bezug auf das Koordinatensystem in Fig. 1 eine zylinderförmige Vertiefung auf. Der Übergang zwischen dem Grund der Vertiefung und der Seitenfläche weist einen Radius auf. Der Radius bildet eine Lauffläche der Wälzkörper einer ersten Kugelrampenkupplung 30. Eine Gegenlauffläche der ersten Kugelrampenkupplung 30 wird von einem kegelförmigen Ansatz einer Abtriebsscheibe 31 gebildet.

Die Antriebsscheibe 31 weist einen glockenförmigen Querschnitt auf. Die Antriebsscheibe 31 weist ferner eine zentrische Bohrung auf, die von der Gewindewelle 13 durchgriffen wird. Die Abtriebsscheibe 31 und die Gewindewelle 13 weisen jedoch an keine direkte drehmomentfeste Welle-Nabe-Verbindung auf, so dass die Abtriebsscheibe 31 unabhängig von der Drehbewegung der Gewindewelle 13 drehbeweglich ist.

Auf ihrer Innenseite weist die glockenförmige Abtriebsscheibe 31 einen Radius auf. Der Radius bildet eine Lauffläche der Wälzkörper einer zweiten Kugelrampenkupplung 32.

Eine Gegenlauffläche der zweiten Kugelrampenkupplung 32 wird von einem kegelförmigen Ansatz eines Freilaufaußenrings 33 gebildet. Der Freilaufaußenring 33 bildet gemeinsam mit dem Freilaufabschnitt 20 der Gewindewelle 13 und dem Freilauf 21 eine nur in einer Drehrichtung wirkende Kupplung.

Durch die Verwendung von Kugelrampenkupplungen 30, 32 können verschiedene Drehmomentpfade, wie sie für die Funktion der Nachstelleinrichtung 1 erforderlich sind und in der Funktionsbeschreibung näher erläutert werden, einfach und bauraumsparend und damit vorteilhaft geschaltet werden.

Der Freilaufaußenring 33 weist einen weiteren Radius an seiner Umfangsfläche auf. Dieser Radius bildet mit einem Zentrierring 34 und Wälzkörpern -hier als Kugeln ausgeführt- ein Wälzlager, durch das der Freilaufaußenring 17 drehbar gelagert ist.

Auf dem Zentrierring 34 stützt sich eine Vorspannfeder 35 ab. Die Vorspannfeder 35 ist eine schraubenförmige Torsionsfeder mit zylindrischem Querschnitt. Die Vorspannfeder 35 erstreckt sich zwischen dem Zentrierring 34 und einem weiteren, in Bezug auf den Zentrierring 34 in negativer y-Richtung in Bezug auf das Koordinatensystem in Fig. 1 koaxial zur Gewindewelle 13 angeordneten Zentrierring 36. Der Zentrierring 36 ist in die Federhülse 37 eingesetzt.

Die Federhülse 37 umgreift mit einem Ansatz 47 einen geometrisch korrespondierenden Kragen des Freilaufaußenrings 33 und ist drehfest mit dem Freilaufaußenring 33 verbunden. Die Federhülse 37 umschließt die Vorspannfeder 35 und bildet an ihrem unteren Ende bzw. in negativer y-Richtung in Bezug auf das Koordinatensystem in Fig. 1 eine Öffnung aus, die den umlaufenden Kragen 38 aufweist. Die Federhülse 37 ist über den Kragen 38 drehfest mit der Hülse 25 verbunden.

Die Federhülse 37 weist an ihrem äußeren Umfang einen Zentrierring 39 auf. Zwischen einer Kreisringfläche 40, die der Kolben 5 an seinem freien Ende des Kolbenhemdes 11 ausbildet und dem Zentrierring 39 weist die Nachstelleinrichtung 1 eine zweite Rückstellfeder 41 auf. Die zweite Rückstellfeder 41 ist eine schraubenförmige Torsionsfeder mit zylindrischem Querschnitt.

Im Folgenden wird die Funktion der Nachstelleinrichtung 1 erläutert. Bei axialer Verschiebung des Kolbens 5 infolge wirkender Druckkräfte oder Rückstellkräfte der Rückstellfedern 27, 41 wird die Gewindewelle 13 über die Gewindemutter 10 in eine Drehbewegung versetzt. Diese Drehbewegung wird einerseits über den Keilverzahnungsabschnitt 15 der Gewindewelle 13 auf die Antriebsscheibe 17 und weiter über die erste Kugelrampenkupplung 30 auf die Abtriebsscheibe 31 übertragen und andererseits über die Sperrwirkung des Freilaufes 21 nur in zustellender Drehrichtung ebenfalls auf die Abtriebsscheibe 31. Von der Abtriebsscheibe 31 wird die -je nach Hubrichtung des Kolbens 5- zu- oder rückstellende Drehbewegung über die über Federhülse 25 bzw. über die Hülse 25 auf das Abtriebsrad 42 auf die wenigstens eine Gewindespindel 26 übertragen, die über einen zweiten Gewindetrieb, der durch das Abtriebsrad 42 und der Gewindespindel 26 gebildet ist, in eine translatorisch wirkende Kraft umgeformt wird. Die Kraft wirkt z.B. über ein Druckstück auf den wenigsten einen Bremsbelag und weiter auf die Bremsscheibe der Scheibenbremse.

Die Wirkungsweise der Nachstelleinrichtung 1 wird nachfolgend anhand von drei Betriebszuständen der Nachstelleinrichtung 1 erläutert:
- Lüftspiel korrekt
- Lüftspiel zu groß
- Lüftspiel zu klein

Bei korrektem Lüftspiel der Scheibenbremse wird die Zustellbewegung für einen Einstellvorgang der Nachstelleinrichtung 1 durch Einleiten von Druckluft in den Zylinder 4 des Kolbens 5 ausgelöst. Der Kolben 5 wird gegen die Kraft der ersten Rückstellfeder 27 und der zweiten Rückstellfeder 41 nach unten bzw. in Richtung negativer y-Richtung in Bezug auf das Koordinatensystem in Fig. 1 verschoben und versetzt dabei die Gewindewelle 13 über den Gewindeabschnitt 14 bzw. über den Gewindetrieb 10, 14 in eine zustellende Drehbewegung.

Die Drehbewegung der Gewindewelle 13 wird über die einsinnige Klemmwirkung des Freilaufes 21 und weiter über die unter der Kraft der Vorspannfeder 35 geschlossene Kugelrampenkupplung 32 auf die Abtriebsscheibe 31 und von dort über die Federhülse 37, die Hülse 25 und das Abtriebsrad 42 auf die wenigstens eine Gewindespindel 26 übertragen.

Die Antriebsscheibe 17 überträgt in dieser Phase noch kein Drehmoment, da sie noch auf dem Anschlagring 12 des Kolbens 5 aufliegt und somit die erste Kugelrampenkupplung 30 noch gelüftet ist.

Der Anschlagring 12 des Kolbens 5 hebt bei weiter in negativer y-Richtung anhaltender Hubbewegung des Kolbens 5 vom unteren Lagerring 29 der Antriebsscheibe 12 ab. Die erste Kugelrampenkupplung 30 wird geschlossen. Gleichzeitig wird die Bewegung der wenigstens einen Gewindespindel 26 durch die infolge der an einer Bremsscheibe der Scheibenbremse anlegenden Bremsbeläge entstehende Reaktionskraft gestoppt.

Der Kolben 5 führt seine Hubbewegung fort, bis der Kolben 5 einen unteren Anschlag erreicht bzw. bis die Kreisringfläche 40, die der Kolben 5 an seinem freien Ende des Kolbenhemdes 11 ausbildet, an den Kragen 47 der Federhülse 37 anschlägt.

Der Betrag, den der Kolben 5 von dem Moment an zurücklegt, in der die erste Kugelrampenkupplung 30 geschlossen ist und gleichzeitig die Bewegung der wenigstens einen Gewindespindel 26 durch die infolge der an einer Bremsscheibe der Scheibenbremse anlegenden Bremsbeläge entstehende Reaktionskraft gestoppt wird, bis der Kolben 5 an den Kragen 47 der Federhülse 37 anschlägt, ist der Rückstellhub h der Nachstelleinrichtung 1.

Der Betrag des Rückstellhubs der Nachstelleinrichtung 1 -und damit der Betrag des Lüftspiels der Scheibenbremse- ist demnach vorteilhaft durch einen definierten Abstand h zweier Bauteile bzw. Geometrieausbildungen 12, 47 -also dem Anschlagring 12 des Kolbens 5 und dem Kragen 47 der Federhülse 27- in einem definierten Betriebszustand der Nachstelleinrichtung 1 gegeben.

Der definierte Betriebszustand der Nachstelleinrichtung 1 ist durch durch die Nach-stelleinrichtung 1 an die Bremsscheibe der Scheibenbremse angelegten Bremsbeläge gekennzeichnet. Dadurch ist der Betrag des Lüftspiels besonders vorteilhaft nur mit geringen Geometrietoleranzen der Bauteile bzw. der Geometrieausbildungen von Bauteilen behaftet, durch dessen Abstand der Betrag des Lüftspiels definiert ist.

Die Antriebsscheibe 12 und der Freilauf 21 befinden sich weiter in Drehbewegung, die jedoch infolge Durchrutschens der ersten Kugelrampenkupplung 30 und der zweiten Kugelrampenkupplung 32 gegen die Abtriebsscheibe 31 nicht weitergeleitet wird. Es erfolgt kein weiteres Zustellen.

Die Rückstellbewegung erfolgt durch Entlüften des Zylinders 4 des Kolbens 5.

Der Kolben 5 wird durch die Kraft der Rückstellfedern 27 und 41 nach oben bzw. in positiver y-Richtung in Bezug auf das Koordinatensystem in Fig. 1 verschoben. Dadurch versetzt der Kolben 5 über die Gewindemutter 10 die Gewindewelle 13 in eine rückstellende Drehbewegung.

Die Rückstelldrehbewegung der Gewindewelle 13 wird durch die Abtriebsscheibe 31 über die Federhülse 37 und die Hülse 25 auf die wenigstens einen Gewindespindel 26 übertragen. Die Rückstelldrehbewegung der Gewindewelle 13 wird in Löserichtung des Freilaufes 21 fortgeführt, bis der Anschlagring 12 des Kolbens 5 den unteren Lagerring 29 der Abtriebsscheibe 31 erreicht und damit die erste Kugelrampenkupplung 30 gelüftet wird.

Das Soll-Lüftspiel der Scheibenbremse ist an dieser Stelle erreicht. Die weitere Rückstelldrehdrehbewegung der Gewindewelle 13 wird nicht mehr auf die wenigstens eine Gewindespindeln 26 übertragen, da der Freilauf 21 in Löserichtung beaufschlagt wird und die erste Kugelrampenkupplung 30 gelüftet ist.

Bei einem zu großen Lüftspiel erfolgt die Zustellbewegung der Nachstelleinrichtung 1 zunächst wie bei einem korrekten Lüftspiel.

Demzufolge wird die Zustellbewegung für einen Einstellvorgang der Nachstelleinrichtung 1 durch Einleiten von Druckluft in den Zylinder 4 des Kolbens 5 ausgelöst. Der Kolben 5 wird gegen die Kraft der ersten Rückstellfeder 27 und der zweiten Rückstellfeder 41 nach unten bzw. in Richtung negativer y-Richtung in Bezug auf das Koordinatensystem in Fig. 1 verschoben und versetzt dabei die Gewindewelle 13 über den Gewindeabschnitt 14 bzw. über den Gewindetrieb 10, 14 in eine zustellende Drehbewegung.

Die Drehbewegung der Gewindewelle 13 wird über die einsinnige Klemmwirkung des Freilaufes 21 und weiter über die unter der Kraft der Vorspannfeder 35 geschlossene Kugelrampenkupplung 32 auf die Abtriebsscheibe 31 und von dort über die Federhülse 37 und die Hülse 25 auf die wenigstens eine Gewindespindel 26 übertragen.

Die Antriebsscheibe 17 überträgt in dieser Phase noch kein Drehmoment, da sie noch auf dem Anschlagring 12 des Kolbens 5 aufliegt und somit die erste Kugelrampenkupplung 30 noch gelüftet ist.

Im gelüfteten Zustand der ersten Kugelrampenkupplung 30 wird jedoch nun der Kugelsatz der ersten Kugelrampenkupplung 30 durch einen Käfig an der Antriebsscheibe 17 gehalten und die in der Antriebsscheibe 17 befindliche Rille wird von den Kugeln abgehoben. Der Anschlagring 12 des Kolbens 5 hebt von der Anschlagfläche an der Antriebsscheibe 17 ab. Die erste Kugelrampenkupplung 30 wird geschlossen. Der Kolben 5 führt seine Hubbewegung fort.

Dass Soll-Lüftspiel wird dabei überschritten. Die Zustell-Drehbewegung der wenigstens einen Gewindespindel 26 wird weitergeführt.

In dieser Phase erfolgt der Ausgleich des vergrößerten Lüftspiels.

Die wenigstens eine Gewindespindel 26 wird durch die infolge der anlegenden Bremsbeläge entstehende Reaktionskraft gestoppt. Der Kolben 5 führt seine Hubbewegung fort bis er den Ansatz 47 erreicht hat, der hier die Funktion eines unteren Kolbenanschlags hat. Die Antriebsscheibe 17 und der Freilauf 21 befinden sich weiter in einer Drehbewegung, die jedoch infolge des Durchrutschens der ersten Kugelrampenkupplung 30 und der zweiten Kugelrampenkupplung 32 gegen die Abtriebsscheibe 31 nicht weitergeleitet wird. Es erfolgt dementsprechend kein weiteres Zustellen.

Die Rückstellbewegung erfolgt wie oben im Funktionsbeispiel für ein korrektes Lüftspiel beschrieben.

Bei einem zu kleinem Lüftspiel erfolgt die Zustellbewegung der Nachstelleinrichtung 1 zunächst wie bei einem korrekten Lüftspiel.

Demzufolge wird die Zustellbewegung für einen Einstellvorgang der Nachstelleinrichtung 1 durch Einleiten von Druckluft in den Zylinder 4 des Kolbens 5 ausgelöst. Der Kolben 5 wird gegen die Kraft der ersten Rückstellfeder 27 und der zweiten Rückstellfeder 41 nach unten bzw. in Richtung negativer y-Richtung in Bezug auf das Koordinatensystem in Fig. 1 verschoben und versetzt dabei die Gewindewelle 13 über den Gewindeabschnitt 14 bzw. über den Gewindetrieb 10, 14 in eine zustellende Drehbewegung.

Die Drehbewegung der Gewindewelle 13 wird über die einsinnige Klemmwirkung des Freilaufes 21 und weiter über die unter der Kraft der Vorspannfeder 35 geschlossene Kugelrampenkupplung 32 auf die Abtriebsscheibe 31 und von dort über die Federhülse 37 und die Hülse 25 auf die wenigstens eine Gewindespindel 26 übertragen. Die Antriebsscheibe 17 überträgt in dieser Phase noch kein Drehmoment, da sie noch auf dem Anschlagring 12 des Kolbens 5 aufliegt und somit die erste Kugelrampenkupplung 30 noch gelüftet ist.

Die Bewegung der wenigstens einen Gewindespindel 26 wird, infolge des zu geringen Lüftspiels, durch das Anlegen der Bremsbeläge an die Bremsscheibe geblockt, bevor der Anschlagring 12 des Kolbens 5 vom unteren Lagerring 29 der Antriebsscheibe 17 abhebt.

Die über die einsinnige Klemmwirkung des Freilaufs 21 übertragene Drehbewegung wird bei blockierter Abtriebsscheibe 31 infolge des Durchrutschens der zweiten Kugelrampenkupplung 32 nicht auf die wenigstens eine Gewindespindel 26 weitergeleitet.

In dieser Phase erfolgt der Ausgleich des zu geringen Lüftspiels.

Der Anschlagring 12 des Kolbens 5 hebt von dem unteren Lagerring 29 der Antriebsscheibe 17 ab. Die erste Kugelrampenkupplung 30 wird geschlossen. Der Kolben 5 führt seine Hubbewegung fort, bis er den Ansatz 47 erreicht hat, der hier die Funktion eines unteren Kolbenanschlags hat. Die Antriebsscheibe 17 und der Freilauf 21 befinden sich weiter in einer Drehbewegung, die jedoch infolge des Durchrutschens der ersten Kugelrampenkupplung 30 und der zweiten Kugelrampenkupplung 32 gegen die Abtriebsscheibe 31 nicht weitergeleitet wird. Es erfolgt dementsprechend kein weiteres Zustellen.

Die Rückstellbewegung erfolgt wie oben im Funktionsbeispiel für ein korrektes Lüftspiel beschrieben.

Die Rückstellbewegung der Nachstelleinrichtung 1 nach dem Tausch von verschlissenen Bremsbelägen zurück in eine Grundstellung erfolgt durch Entriegeln der Verdrehsicherungseinrichtung des Kolbens 5 und durch eine Betätigung des Kolbens 5.

### Bezugszeichenliste

- 1: Nachstelleinrichtung
- 2: Bremssattel
- 3: Aktuatoreinrichtung
- 4: Zylinder
- 5: Kolben
- 6: Dichtung
- 7: Kolbenanschlag
- 8: Kolbenboden
- 9: Kragen
- 10: Gewindemutter
- 11: Kolbenhemd
- 12: Anschlagring
- 13: Gewindewelle
- 14: Gewindeabschnitt
- 15: Keilverzahnungsabschnitt
- 16: Keilverzahnungsnabe
- 17: Antriebsscheibe
- 18: Lagerabschnitt
- 19: Axialnadellager
- 20: Freilaufabschnitt
- 21: Freilauf
- 22: Sechskantschraube
- 23: Axiallagerscheibe
- 24: Wälzkörperrille
- 25: Hülse
- 26: Gewindespindel
- 27: Rückstellfeder
- 28: Lagerring, oben
- 29: Lagerring, unten
- 30: Kugelrampenkupplung
- 31: Abtriebsscheibe
- 32: Kugelrampenkupplung
- 33: Freilaufaußenring
- 34: Zentrierring
- 35: Vorspannfeder
- 36: Zentrierring
- 37: Federhülse
- 38: Kragen
- 39: Zentrierring
- 40: Kreisringfläche
- 41: Rückstellfeder
- 42: Abtriebsrad
- 43: Synchronisationsmittel
- 44: Abtriebselemente
- 45: Übertragungselemente
- 46: Innenprofil
- 47: Ansatz
- 48: Innengewinde

## Patentansprüche

1. Nachstelleinrichtung (1) für eine pneumatisch betätigbare Scheibenbremse für ein Fahrzeug, die zum Verschleißausgleich zwischen einem Bremsbelag oder mehreren Bremsbelägen und/oder einer Bremsscheibe ausgelegt ist, wobei die Nachstelleinrichtung zumindest folgendes aufweist:
- eine pneumatische Aktuatoreinrichtung (3), welche einen Zylinder (4) aufweist, in den ein axial verschiebbarer und mit Druckluft beaufschlagbarer Kolben (5) eingesetzt ist, der durch Druckluftbeaufschlagung in eine erste Richtung bewegbar ist;
- einen nicht selbsthemmend ausgelegten Gewindetrieb (10, 13, 14), der eine Gewindemutter (10) und eine Gewindewelle (13) aufweist;
- wobei der Kolben (5) mit der Gewindemutter (13) drehfest gekoppelt ist und wobei die Gewindewelle (13) drehbar die Gewindemutter (10) durchsetzt;
**dadurch gekennzeichnet, dass**
- wenigstens eine Rückstellfeder (27, 41) vorgesehen ist, mit welcher der Kolben (5) im Zylinder (4) in eine der ersten Richtung entgegengesetzte zweite Richtung bewegbar ist,
- und die Nachstelleinrichtung (1) derart ausgelegt ist, dass infolge einer Beaufschlagung des Kolbens (5) mit Druckluft ein Zustellhub sowie federbetätigt infolge der Federkraft der wenigstens einen Rückstellfeder (27, 41) ein Rückstellhub ausführbar ist.

2. Nachstelleinrichtung nach Anspruch 1, **dadurch gekennzeichnet, dass** infolge einer Beaufschlagung des Kolbens (5) mit Druckluft eine Drehung der Gewindewelle (13) in eine erste Drehrichtung erfolgt und infolge einer Beaufschlagung des Kolbens (5) mit der Federkraft der wenigstens einen Rückstellfeder (27, 41) eine Drehung in eine zur ersten Drehrichtung entgegengesetzte zweite Drehrichtung.

3. Nachstelleinrichtung nach Anspruch 1 oder 2, **dadurch gekennzeichnet, dass** der Zustellhub und der Rückstellhub der Gewindespindel (26) durch Schalten von einer Kupplung oder mehreren Kupplungen (30, 32) beendbar ist.

4. Nachstelleinrichtung nach Anspruch 1, 2 oder 3, **dadurch gekennzeichnet, dass** der Betrag des Rückstellhubs der Nachstelleinrichtung (1) durch einen definierten Abstand h zwischen zwei Bauteilen bzw. zwei Geometrieausbildungen von Bauteilen (12, 47) der Nachstelleinrichtung (1) bestimmt ist, wobei der Abstand h in einem definierten Betriebszustand der Nachstelleinrichtung (1) festgelegt ist.

5. Nachstelleinrichtung (1) nach Anspruch 4, **dadurch gekennzeichnet, dass** der definierte Betriebszustand dadurch festgelegt ist, dass der Bremspunkt eines Bremsbelages der Scheibenbremse erreicht ist.

6. Nachstelleinrichtung (1) nach Anspruch 5, **dadurch gekennzeichnet, dass** die Bauteile bzw. die Geometrieausbildungen ein Anschlagring (12) des Kolbens (5) der pneumatischen Aktuatoreinrichtung (3) und ein Kragen (47) einer Federhülse (37) sind.

7. Nachstelleinrichtung (1) nach einem der vorgenannten Ansprüche, **dadurch gekennzeichnet, dass** der Kolben (5) mehrere obere Kolbenanschläge (7) aufweist und sich die Kolbenanschläge (7) jeweils erhaben über den Kolbenboden (8) erstrecken und vorzugsweise einstückig an den Kolben (5) angeformt ist/sind.

8. Nachstelleinrichtung (1) nach einem der vorgenannten Ansprüche, **dadurch gekennzeichnet, dass** der Kolben (5) einen zentrisch angeordneten Kragen (9) aufweist und/oder eine zentrale Bohrung.

9. Nachstelleinrichtung (1) nach Anspruch 8, **dadurch gekennzeichnet, dass** die Bohrung von der Gewindemutter (10) durchsetzt ist und dass die Gewindemutter (10) drehfest mit dem Kolben (5) gekoppelt ist.

10. Nachstelleinrichtung (1) nach einem der vorgenannten Ansprüche, **dadurch gekennzeichnet, dass** der Kolben (5) eine entriegelbare Verdrehsicherungseinrichtung aufweist, die eine axiale Verschiebung des Kolbens (5) ermöglicht.

11. Nachstelleinrichtung (1) nach einem der vorgenannten Ansprüche, **dadurch gekennzeichnet, dass** die Gewindewelle (13) einen Gewindeabschnitt (14) aufweist, wobei der Gewindeabschnitt (14) in Wirkverbindung mit der Gewindemutter (10) steht, die vom Gewindeabschnitt (14) der Gewindewelle (13) durchgriffen ist.

12. Nachstelleinrichtung (1) nach einem der vorgenannten Ansprüche, **dadurch gekennzeichnet, dass** der Gewindeabschnitt (14) der Gewindewelle (13) und die Gewindemutter (10) jeweils ein nicht selbsthemmendes Gewinde aufweist.

13. 44- Nachstelleinrichtung (1) nach einem der vorgenannten Ansprüche, **dadurch gekennzeichnet, dass** die Gewindewelle (13) ferner einen Keilverzahnungsabschnitt (15) aufweist, wobei der Keilverzahnungsabschnitt (15) in Wirkverbindung mit einer Keilverzahnungsnabe (16) steht.

14. Nachstelleinrichtung (1) nach einem der vorgenannten Ansprüche, **dadurch gekennzeichnet, dass** die Nachstelleinrichtung (1) eine Antriebsscheibe (17) aufweist.

15. Nachstelleinrichtung (1) nach Anspruch 14, **dadurch gekennzeichnet, dass** die Antriebsscheibe (17) die Keilverzahnungsnabe (16) aufweist.

16. Nachstelleinrichtung (1) nach einem der vorgenannten Ansprüche, **dadurch gekennzeichnet, dass** die Gewindewelle (13) an einem Lager drehbar in einem Bremssattel (2) einer der Nachstelleinrichtung (1) zuzuordnenden Scheibenbremse gelagert ist.

17. Nachstelleinrichtung (1) nach Anspruch 16 **dadurch gekennzeichnet, dass** das Lager ein Axiallager ist, insbesondere ein zweiseitig wirkendes Axialnadellager (19).

18. Nachstelleinrichtung (1) nach Anspruch 17, **dadurch gekennzeichnet, dass** die Gewindewelle (13) einen mehrfach gestuften Lagerabschnitt (18) aufweist, durch den die Gewindewelle (13) an dem Lager drehbar in dem Bremssattel (2) der der Nachstelleinrichtung (1) zuzuordnenden Scheibenbremse gelagert ist.

19. Nachstelleinrichtung (1) nach einem der vorgenannten Ansprüche, **dadurch gekennzeichnet, dass** der Bremssattel (2) der der Nachstelleinrichtung (1) zuzuordnenden Scheibenbremse eine Öffnung, insbesondere eine Bohrung, aufweist, in der das Lager eingesetzt und in axialer Richtung festgelegt ist.

20. Nachstelleinrichtung (1) nach einem der vorgenannten Ansprüche, **dadurch gekennzeichnet, dass** die Gewindewelle (13) einen Freilaufabschnitt (20) aufweist und dass der Freilaufabschnitt (20) der Gewindewelle (13) die Nabe eines Freilaufs (21) durchgreift.

21. Nachstelleinrichtung (1) nach einem der vorgenannten Ansprüche, **dadurch gekennzeichnet, dass** an der Gewindewelle (13) eine Axiallagerscheibe (23) befestigt ist.

22. Nachstelleinrichtung (1) nach Anspruch 21, **dadurch gekennzeichnet, dass** die Axiallagerscheibe (23) gemeinsam mit einer Wälzkörperrille (24) sowie Wälzkörpern ein Axiallager bildet, wobei die Wälzkörperrille (24) in eine Stirnseite einer Hülse (25) durch ein Umformverfahren eingebracht ist.

23. Nachstelleinrichtung (1) nach Anspruch 22, **dadurch gekennzeichnet, dass** sich die Hülse (25) koaxial zur Gewindewelle (13) anschließt.

24. Nachstelleinrichtung (1) nach Anspruch 23, **dadurch gekennzeichnet, dass** die Nachstelleinrichtung (1) wenigstens eine Gewindespindel (26) aufweist und die Gewindespindel (26) mit ihrem der Gewindewelle (13) zugewandten Ende zumindest teilweise in die Hülse (25) eintaucht.

25. Nachstelleinrichtung (1) nach Anspruch 24, **dadurch gekennzeichnet, dass** die Nachstelleinrichtung (1) wenigstens ein Abtriebsrad (42) aufweist.

26. Nachstelleinrichtung (1) nach Anspruch 25, **dadurch gekennzeichnet, dass** das wenigstens eine Abtriebsrad (42) ein Synchronisationsmittel (43) aufweist, wobei das Synchronisationsmittel (43) als Kettenradverzahnung oder als Evolventenverzahnung ausgeführt ist.

27. Nachstelleinrichtung (1) nach einem der Ansprüche 25 oder 26, **dadurch gekennzeichnet, dass** das Abtriebsrad (42) ein Innenprofil (46) aufweist, wobei das Innenprofil (46) nach der Art eines Verzahnungsprofils gestaltet ist.

28. Nachstelleinrichtung (1) nach einem der Ansprüche 25 bis 27, **dadurch gekennzeichnet, dass** das Abtriebsrad (42) ein Innengewinde (48) aufweist, das mit einem Außengewinde der Gewindespindel (26) in Wirkverbindung steht und so ein zweiter Gewindetrieb gebildet ist.

29. Nachstelleinrichtung (1) nach Anspruch 28, **dadurch gekennzeichnet, dass** der zweite Gewindetrieb ein Drehmoment der Gewindewelle (13) in eine translatorisch wirkende Kraft umwandelt, die auf den wenigsten einen Bremsbelag bzw. auf die Bremsscheibe der Scheibenbremse wirkt.

30. Nachstelleinrichtung (1) nach Anspruch 29, **dadurch gekennzeichnet, dass** das Abtriebsrad (42) drehfest mit der Gewindespindel (26) verbunden ist.

31. Nachstelleinrichtung (1) nach Anspruch 30, **dadurch gekennzeichnet, dass** der zweite Gewindetrieb durch die Gewindespindel (26) und einem Innengewinde in einem Druckstück oder einem Innengewinde in einer Belagplatte des Bremsbelages oder einem Innengewinde in einem weiteren Bauteil gebildet ist.

32. Nachstelleinrichtung (1) nach einem der Ansprüche 22 bis 31, **dadurch gekennzeichnet, dass** die Hülse (25) an ihrem Umfang mehrere Abtriebselemen-te (44) aufweist, wobei die Abtriebselemente (44) jeweils nach der Art eines Verzahnungsprofils gestaltet sind.

33. Nachstelleinrichtung (1) nach einem der vorgenannten Ansprüche, **dadurch gekennzeichnet, dass** ein in die Hülse (25) eingeleitete Drehmoment der Gewindewelle (13) durch die Abtriebselemente (44) über Übertragungselemente (45) auf das Innenprofil (46) des Abtriebsrads (42) übertragen wird.

34. Nachstelleinrichtung (1) nach einem der vorgenannten Ansprüche, **dadurch gekennzeichnet, dass** sich die erste Rückstellfeder (27) mit ihrem oberen Ende in einem Übergang zwischen einer Innenseite des Kolbenbodens (8) und dem Kragen (9) abstützt und sich mit ihrem unteren Ende auf einem oberen Lagerring (28) abstützt.

35. Nachstelleinrichtung (1) nach einem der vorgenannten Ansprüche, **dadurch gekennzeichnet, dass** der oberer Lagerring (28) mit der Antriebsscheibe (17) und Wälzkörpern ein erstes Wälzlager bildet, durch das die Antriebsscheibe (17) drehbar gelagert ist.

36. Nachstelleinrichtung (1) nach einem der vorgenannten Ansprüche, **dadurch gekennzeichnet, dass** ein zweites Wälzlager, durch das die Antriebsscheibe (17) drehbar gelagert ist, durch einen unteren Lagerring (29) und Wälzkörper gebildet ist.

37. Nachstelleinrichtung (1) nach einem der vorgenannten Ansprüche, **dadurch gekennzeichnet, dass** die erste Kupplung eine erste Kugelrampenkupplung (30) ist.

38. Nachstelleinrichtung (1) nach einem der vorgenannten Ansprüche, **dadurch gekennzeichnet, dass** die zweite Kupplung eine zweite Kugelrampenkupplung (30) ist.

39. Nachstelleinrichtung (1) nach einem der vorgenannten Ansprüche, **dadurch gekennzeichnet, dass** die Nachstelleinrichtung (1) eine weitere Rückstellfeder (41) aufweist.

## Claims

1. A readjustment device (1) for a pneumatically actuatable disc brake for a vehicle that is designed to compensate for wear between one or more brake pads and/or a brake disc, the readjustment device having at least the following:
- a pneumatic actuator device (3) having a cylinder (4) into which is inserted an axially displaceable piston (5), to which compressed air can be applied and which can be moved in a first direction by the application of compressed air;
- a threaded drive (10, 13, 14) of non-self-locking design that has a threaded nut (10) and a threaded shaft (13);
- the piston (5) being coupled rotationally conjointly to the threaded nut (13) and the threaded shaft (13) extending rotatably through the threaded nut (10);
**characterised in that**
- there is provided at least one resetting spring (27, 41) by means of which the piston (5) can be moved in the cylinder (4) in a second direction that is opposite to the first direction,
- and the readjustment device (1) is designed such that an advancing stroke can be performed as a result of the application of compressed air to the piston (5) and a resetting stroke can be performed in spring-actuated fashion as a result of the spring force of the at least one resetting spring (27, 41).

2. A readjustment device according to claim 1, **characterised in that** a rotation of the threaded spindle (13) in a first direction of rotation occurs as a result of the application of compressed air to the piston (5) and a rotation in a second direction of rotation opposite to the first direction of rotation occurs as a result of the application of the spring force of the at least one resetting spring (27, 41) to the piston (5).

3. A readjustment device according to claim 1 or 2, **characterised in that** the advancing stroke and the resetting stroke of the threaded spindle (26) can be ended by switching one or more couplings (30, 32).

4. A readjustment device according to claim 1, 2 or 3, **characterised in that** the magnitude of the resetting stroke of the readjustment device (1) is determined by a defined spacing h between two components or two geometrical formations of components (12, 47) of the readjustment device (1), the spacing h being set in a defined operating state of the readjustment device (1).

5. A readjustment device (1) according to claim 4, **characterised in that** the defined operating state is set by virtue of the biting point of a brake pad of the disc brake being reached.

6. A readjustment device according to claim 5, **characterised in that** the components or geometrical formations are a stop ring (12) of the piston (5) of the pneumatic actuator device (3) and a collar (47) of a spring sleeve (37).

7. A readjustment device (1) according to any of the preceding claims, **characterised in that** the piston (5) has a plurality of upper piston stops (7) and that the piston stops (7) each extend in elevated fashion over the piston crown (8) and is/are preferably formed integrally on the piston (5).

8. A readjustment device (1) according to any of the preceding claims, **characterised in that** the piston (5) has a centrally arranged collar (9) and/or a central bore.

9. A readjustment device (1) according to claim 8, **characterised in that** the threaded nut (10) extends through the bore and is coupled rotationally conjointly to the piston (5).

10. A readjustment device (1) according to any of the preceding claims, **characterised in that** the piston (5) has an unlockable rotation prevention device that permits an axial displacement of the piston (5).

11. A readjustment device (1) according to any of the preceding claims, **characterised in that** the threaded shaft (13) has a threaded section (14), the threaded section (14) being operatively connected to the threaded nut (10) through which the threaded section (14) of the threaded shaft (13) extends.

12. A readjustment device (1) according to any of the preceding claims, **characterised in that** the threaded section (14) of the threaded shaft (13) and the threaded nut (10) each have a non-self-locking thread.

13. A readjustment device (1) according to any of the preceding claims, **characterised in that** the threaded shaft (13) further has a spline-toothed section (15), the spline-toothed section (15) being operatively connected to a spline-toothed hub (16).

14. A readjustment device (1) according to any of the preceding claims, **characterised in that** the readjustment device (1) has a drive disc (17).

15. A readjustment device (1) according to claim 14, **characterised in that** the drive disc (17) has the spline-toothed hub (16).

16. A readjustment device (1) according to any of the preceding claims, **characterised in that** the threaded shaft (13) is mounted rotatably on a bearing in one brake calliper (2) of a disc brake to be allocated to the readjustment device (1).

17. A readjustment device (1) according to claim 16, **characterised in that** the bearing is an axial bearing, in particular a double-acting axial needle bearing (19).

18. A readjustment device (1) according to claim 17, **characterised in that** the threaded shaft (13) has a multiply stepped bearing section (18) by means of which the threaded shaft (13) is mounted rotatably on the bearing in the brake calliper (2) of the disc brake to be assigned to the readjustment device (1).

19. A readjustment device (1) according to any of the preceding claims, **characterised in that** the brake calliper (2) of the disk brake to be assigned to the readjustment device (1) has an opening, in particular a bore, in which the bearing is inserted and fixed in an axial direction.

20. A readjustment device (1) according to any of the preceding claims, **characterised in that** the threaded shaft (13) has a freewheel section (20) and that the freewheel section (20) of the threaded shaft (13) extends through the hub of a freewheel (21).

21. A readjustment device (1) according to any of the preceding claims, **characterised in that** an axial bearing disc (23) is fastened to the threaded shaft (13).

22. A readjustment device (1) according to claim 21, **characterised in that** the axial bearing disc (23) together with a rolling body channel (24) and rolling bodies forms an axial bearing, the rolling body channel (24) being made in a front face of a sleeve (25) by means of a deformation process.

23. A readjustment device (1) according to claim 22, **characterised in that** the sleeve (25) coaxially adjoins the threaded shaft (13).

24. A readjustment device (1) according to claim 23, **characterised in that** the readjustment device (1) has at least one threaded spindle (26) and that the end of the threaded spindle (26) facing the threaded shaft (13) projects at least partially into the sleeve (25).

25. A readjustment device (1) according to claim 24, **characterised in that** the readjustment device (1) has at least one output wheel (42).

26. A readjustment device (1) according to claim 25, **characterised in that** the at least one output wheel (42) has a synchronization means (43), this synchronization means (43) taking the form of sprocket toothing or involute toothing.

27. A readjustment device (1) according to any of claims 25 or 26, **characterised in that** the output wheel (42) has an internal profile (46), this internal profile (46) being designed in the manner of a toothed profile.

28. A readjustment device (1) according to any of claims 25 to 27, **characterised in that** the output wheel (42) has an internal thread (48) that is operatively connected to an external thread of the threaded spindle (26), thereby forming a second threaded drive.

29. A readjustment device (1) according to claim 28, **characterised in that** the second threaded drive converts a torque of the threaded shaft (13) into a translationally acting force that acts on the at least one brake pad or on the brake disc of the disc brake.

30. A readjustment device (1) according to claim 29, **characterised in that** the output wheel (42) is connected rotationally conjointly to the threaded spindle (26).

31. A readjustment device (1) according to claim 30, **characterised in that** the second threaded drive takes the form of the threaded spindle (26) and an internal thread in a thrust piece or an internal thread in a pad plate of the brake pad or an internal thread in a further component.

32. A readjustment device (1) according to any of the claims 22 to 31, **characterised in that** the sleeve (25) has a plurality of output elements (44) on its circumference, the output elements (44) each being designed in the manner of a toothed profile.

33. A readjustment device (1) according to any of the preceding claims, **characterised in that**, being introduced into the sleeve (25), a torque of the threaded shaft (13) is transmitted by the output elements (44) via transmission elements (45) to the internal profile (46) of the output wheel (42).

34. A readjustment device (1) according to any of the preceding claims, **characterised in that** the upper end of the first resetting spring (27) is supported in a transition between an inner side of the piston crown (8) and the collar (9) and the lower end is supported on an upper bearing ring (28).

35. A readjustment device (1) according to any of the preceding claims, **characterised in that** the upper bearing ring (28) having the drive disc (17) and rolling bodies forms a first roller bearing by means of which the drive disc (17) is rotatably mounted.

36. A readjustment device (1) according to any of the preceding claims, **characterised in that** a second roller bearing, by means of which the drive disc (17) is rotatably mounted, takes the form of a lower bearing ring (29) and rolling bodies.

37. A readjustment device (1) according to any of the preceding claims, **characterised in that** the first coupling is a first ball ramp coupling (30).

38. A readjustment device (1) according to any of the preceding claims, **characterised in that** the second coupling is a second ball ramp coupling (30).

39. A readjustment device (1) according to any of the preceding claims, **characterised in that** the readjustment device (1) has a further resetting spring (41).

## Revendications

1. Dispositif (1) de rattrapage de jeu pour un frein à disque à actionnement pneumatique d'un véhicule, qui est conçu pour compenser l'usure entre une garniture de frein ou plusieurs garnitures de frein et/ou un disque de frein, le dispositif de rattrapage de jeu ayant au moins ce qui suit :
- un dispositif (3) actionneur pneumatique, qui a un cylindre (4), dans lequel est inséré un piston (5), qui peut coulisser axialement, qui peut être alimenté en air comprimé et qui peut être déplacé dans un premier sens par l'alimentation en air comprimé ;
- une transmission (10, 13, 14) à engrenage non-autobloquante, qui a un écrou (10) fileté et un arbre (13) fileté,
- dans lequel le piston est solidaire en rotation de l'écrou (3) fileté et dans lequel l'arbre (13) fileté traverse, avec possibilité de tourner, l'écrou (10) fileté ;
**caractérisé en ce que**
- il est prévu au moins un ressort (27, 41) de rappel, par lequel le piston (5) peut être déplacé dans le cylindre (4) dans un deuxième sens contraire au premier sens,
- et le dispositif (1) de rattrapage de jeu est conçu de manière à ce que, en raison d'une alimentation du piston (5) en air comprimé, puisse être réalisée une course d'avance, ainsi que, sous l'actionnement d'un ressort en raison de la force du au moins un ressort (27, 41) de rappel, une course de rappel.

2. Dispositif de rattrapage de jeu suivant la revendication 1, **caractérisé en ce qu'**en raison d'une alimentation du piston (5) en air comprimé, il s'effectue une rotation de l'arbre (13) fileté dans un premier sens de rotation et, en raison du fait que le piston (5) est soumis à la force du au moins un ressort (27, 41) de rappel, il s'effectue une rotation dans un deuxième sens de rotation contraire au premier sens de rotation.

3. Dispositif de rattrapage de jeu suivant la revendication 1 ou 2, **caractérisé en ce qu'**il peut être mis fin à la course d'avance et à la course de rappel de la broche (26) fileté par enclenchement d'un embrayage ou de plusieurs embrayages (30, 32) .

4. Dispositif de rattrapage de jeu suivant la revendication 1, 2 ou 3, **caractérisé en ce que** la valeur de la course de rappel du dispositif (1) de rattrapage de jeu est déterminée par une distance h définie entre deux pièces ou entre deux constitutions géométriques de pièces (12, 47) du dispositif (1) de rattrapage de jeu, la distance h étant fixée dans un état de fonctionnement défini du dispositif (1) de rattrapage de jeu.

5. Dispositif (1) de rattrapage de jeu suivant la revendication 4, **caractérisé en ce que** l'état de fonctionnement défini est fixé par le fait que le point de freinage d'une garniture du frein à disque est atteint.

6. Dispositif (1) de rattrapage de jeu suivant la revendication 5, **caractérisé en ce que** les pièces ou les constitutions géométriques sont une bague (12) de butée du piston (5) du dispositif (3) actionneur pneumatique et un collet (47) d'un manchon (37) à ressort.

7. Dispositif (1) de rattrapage de jeu suivant l'une des revendications précédentes, **caractérisé en ce que** le piston a plusieurs butées (7) supérieures et les butées (7) du piston s'étendent chacune en relief du fond (8) du piston et est/ou sont formées de préférence d'une seule pièce avec le piston (5) .

8. Dispositif (1) de rattrapage de jeu suivant l'une des revendications précédentes, **caractérisé en ce que** le piston (5) a un collet (9) disposé de manière centrale et/ou un alésage central.

9. Dispositif (1) de rattrapage de jeu suivant la revendication 8, **caractérisé en ce que** l'alésage est traversé par l'écrou (10) fileté et **en ce que** l'écrou (10) fileté est solidaire en rotation du piston (5).

10. Dispositif (1) de rattrapage de jeu suivant l'une des revendications précédentes, **caractérisé en ce que** le piston (5) a un dispositif déverrouillable d'anti-torsion, qui autorise un déplacement axial du piston (5).

11. Dispositif (1) de rattrapage de jeu suivant l'une des revendications précédentes, **caractérisé en ce que** l'arbre (13) fileté a une partie (14) filetée, la partie (14) filetée étant en liaison d'action avec l'écrou (10) fileté, dans lequel passe la partie (14) filetée de l'arbre (13) fileté.

12. Dispositif (1) de rattrapage de jeu suivant l'une des revendications précédentes, **caractérisé en ce que** la partie (14) filetée de l'arbre (13) fileté et l'écrou (10) fileté ont chacun un filetage non-autobloquant.

13. Dispositif (1) de rattrapage de jeu suivant l'une des revendications précédentes, **caractérisé en ce que** l'arbre (13) fileté a, en outre, une partie (15) de denture à coin, la partie (15) de denture à coin étant en coopération d'action avec un moyeu (16) de denture à coin.

14. Dispositif (1) de rattrapage de jeu suivant l'une des revendications précédentes, **caractérisé en ce que** le dispositif (1) de rattrapage de jeu a un disque (17) d'entraînement.

15. Dispositif (1) de rattrapage de jeu suivant la revendication 14, **caractérisé en ce que** le disque (17) d'entraînement a le moyeu (16) de denture à coin.

16. Dispositif (1) de rattrapage de jeu suivant l'une des revendications précédentes, **caractérisé en ce que** l'arbre (13) fileté est monté tournant sur un palier dans un étrier (2) d'un frein à disque associé au dispositif (1) de rattrapage de jeu.

17. Dispositif (1) de rattrapage de jeu suivant la revendication 16, **caractérisé en ce que** le palier est un palier axial, notamment un palier (19) à aiguille axial à action de deux côtés.

18. Dispositif (1) de rattrapage de jeu suivant la revendication 17, **caractérisé en ce que** l'arbre (13) fileté a une partie (18) de palier échelonnée plusieurs fois, par laquelle l'arbre (13) fileté est monté tournant dans le palier dans l'étrier (2) de frein du frein à disque pouvant être associé au dispositif (1) de rattrapage de jeu.

19. Dispositif (1) de rattrapage de jeu suivant l'une des revendications précédentes, **caractérisé en ce que** l'étrier (2) de frein du frein à disque pouvant être associé au dispositif (1) de rattrapage de jeu a une ouverture, notamment un alésage, dans lequel le palier est inséré et fixé dans la direction axiale.

20. Dispositif (1) de rattrapage de jeu suivant l'une des revendications précédentes, **caractérisé en ce que** l'arbre (13) fileté a une partie (20) de roue libre et **en ce que** la partie (20) de roue libre de l'arbre (13) fileté traverse le moyeu d'une roue libre (21).

21. Dispositif (1) de rattrapage de jeu suivant l'une des revendications précédentes, **caractérisé en ce qu'**un disque (23) de palier axial est fixé à l'arbre (13) fileté.

22. Dispositif (1) de rattrapage de jeu suivant la revendication 21, **caractérisé en ce que** le disque (23) de palier axial forme, ensemble avec une rainure (24) de corps de roulement, ainsi que des corps de roulement, un palier axial, la rainure (24) de corps de roulement étant ménagée dans un côté frontal d'une douille (25) par un procédé de déformation.

23. Dispositif (1) de rattrapage de jeu suivant la revendication 22, **caractérisé en ce que** la douille (25) se raccorde coaxialement à l'arbre (13) fileté.

24. Dispositif (1) de rattrapage de jeu suivant la revendication 23, **caractérisé en ce que** le dispositif (1) de rattrapage de jeu a au moins une broche (26) filetée et la broche (26) filetée plonge, par son extrémité tournée vers l'arbre (13) fileté, au moins en partie, dans la douille (25).

25. Dispositif (1) de rattrapage de jeu suivant la revendication 24, **caractérisé en ce que** le dispositif (1) de rattrapage de jeu a au moins une roue (42) de sortie.

26. Dispositif (1) de rattrapage de jeu suivant la revendication 25, **caractérisé en ce que** la au moins une roue (42) de sortie a un moyen (43) de synchronisation, le moyen (43) de synchronisation étant réalisé sous la forme d'une denture à roue à chaîne ou d'une denture à développante.

27. Dispositif (1) de rattrapage de jeu suivant l'une des revendications 25 ou 26, **caractérisé en ce que** la roue (42) de sortie a un profil (46) intérieur, le profil (46) intérieur étant conformé à la manière d'un profil de denture.

28. Dispositif (1) de rattrapage de jeu suivant l'une des revendications 25 à 27, **caractérisé en ce que** la roue (42) de sortie a un taraudage (48), qui est en liaison d'action avec un filetage de la broche (26) filetée et forme ainsi une deuxième transmission à engrenage.

29. Dispositif (1) de rattrapage de jeu suivant la revendication 28, **caractérisé en ce que** la deuxième transmission à engrenage transforme un couple de l'arbre (13) fileté en une force de translation, qui s'applique à la au moins une garniture de frein ou au disque de frein du frein à disque.

30. Dispositif (1) de rattrapage de jeu suivant la revendication 29, **caractérisé en ce que** la roue (42) de sortie est solidaire de la broche (26) filetée.

31. Dispositif (1) de rattrapage de jeu suivant la revendication 30, **caractérisé en ce que** la deuxième transmission à engrenage est formée par la broche (26) filetée et par un taraudage dans une pièce d'application d'une pression ou par un taraudage dans une plaque de la garniture de frein ou par un taraudage dans une autre pièce.

32. Dispositif (1) de rattrapage de jeu suivant l'une des revendications 22 à 31, **caractérisé en ce que** la douille (25) a, sur son pourtour, plusieurs éléments (44) de sortie, les éléments (44) de sortie étant conformés chacun à la manière d'un profil de denture.

33. Dispositif (1) de rattrapage de jeu suivant l'une des revendications précédentes, **caractérisé en ce qu'**un couple, appliqué à la douille (25) de l'arbre (13) fileté, est transmis par les éléments (44) de sortie, par l'intermédiaire d'éléments (45) de transmission, au profil (46) intérieur de la roue (42) de sortie.

34. Dispositif (1) de rattrapage de jeu suivant l'une des revendications précédentes, **caractérisé en ce que** le premier ressort (27) de rappel s'appuie, par son extrémité supérieure, dans une transition entre un côté intérieur du fond (8) du piston et le collet (9), et s'appuie, par son extrémité inférieure, sur une bague (28) supérieure de palier.

35. Dispositif (1) de rattrapage de jeu suivant l'une des revendications précédentes, **caractérisé en ce que** la bague (28) supérieure de palier forme, avec le disque (17) d'entraînement et des corps de roulement, un premier palier à roulement, par lequel le disque (17) d'entraînement est monté tournant.

36. Dispositif (1) de rattrapage de jeu suivant l'une des revendications précédentes, **caractérisé en ce qu'**un deuxième palier à roulement, par lequel le disque (17) d'entraînement est monté tournant, est formé par une bague (29) inférieure de palier et par des corps de roulement.

37. Dispositif (1) de rattrapage de jeu suivant l'une des revendications précédentes, **caractérisé en ce que** le premier embrayage est un premier embrayage (30) à rampe à bille.

38. Dispositif (1) de rattrapage de jeu suivant l'une des revendications précédentes, **caractérisé en ce que** le deuxième embrayage est un deuxième embrayage (30) à rampe à bille.

39. Dispositif (1) de rattrapage de jeu suivant l'une des revendications précédentes, **caractérisé en ce que** le dispositif (1) de rattrapage de jeu a un autre ressort (41) de rappel.
